# EUROPEAN PATENT SPECIFICATION

(11) **EP 4 432 611 B1**
(45) Date of publication and mention of the grant of the patent: **28.10.2026**
(21) Application number: 22919008.7
(22) Date of filing: 21.11.2022
(51) Int. Cl.: H04L 12/40, G07C 5/00, H04L 12/46, H04L 67/12, H04W 4/38

(54) **IN-VEHICLE COMMUNICATION APPARATUS AND OPERATION METHOD THEREOF**
KOMMUNIKATIONSVORRICHTUNG FÜR EIN FAHRZEUG UND BETRIEBSVERFAHREN DAFÜR
DISPOSITIF DE COMMUNICATION POUR UN VÉHICULE ET PROCÉDÉ DE FONCTIONNEMENT ASSOCIÉ

(30) Priority: 04.01.2022 KR 20220001206
(43) Date of publication of application: 18.09.2024
(73) Proprietor: LG Energy Solution, Ltd., Seoul 07335 (KR)
(72) Inventor: JO, Jeong Jae, Daejeon 34122 (KR)
(74) Representative: Plasseraud IP
(86) International application number: PCT/KR2022/018431
(87) International publication number: WO 2023/132471

(56) References cited:
- KR-A- 20100 002 482
- KR-A- 20190 094 531
- KR-A- 20210 030 154
- KR-A- 20210 112 285
- KR-B1- 100 813 267
- US-A1- 2005 038 581
- US-A1- 2014 129 047
- US-A1- 2014 213 238
- US-A1- 2016 350 985
- US-B1- 6 732 031
- GAO GUOYOU ET AL: "An Internet of Vehicles System for Remote Monitoring and Fault Diagnosis of Automobiles", JOURNAL OF AUTOMATION AND CONTROL ENGINEERING, vol. 6, no. 1, 1 June 2018 (2018-06-01), pages 47 - 52, XP093220327, ISSN: 2301-3702, DOI: 10.18178/joace.6.1.47-52

## Description

### [TECHNICAL FIELD]

### CROSS-REFERENCE TO RELATED APPLICATION

This application claims priority to Korean Patent Application No. 10-2022-0001206, filed January 4, 2022.

### TECHNICAL FIELD

Embodiments disclosed in this document relate to an in-vehicle communication apparatus and an operation method thereof.

### [BACKGROUND ART]

On-Board Diagnostics OBD, as a diagnostic standard for checking and controlling the electrical/electronic operation of a vehicle, was initially used to improve maintenance efficiency of electronic parts such as engines but has recently served as a trip computer with an interface to show drivers various vehicle information.

In general, an OBD system is provided with a microcontroller unit MCU that acquires and manages vehicle state data and a communication module, e.g., an LTE module such as EC25-E, that receives data from the MCU and exchanges data with external servers, terminals, etc. through a wireless communication network. Particularly in the case of conventional LTE module, data exchange with MCU is performed through a Universal Asynchronous Receiver/Transmitter UART interface, which has a maximum transmission rate slower than that of Serial Peripheral Interface SPI and causes additional delay due to being pushed back by high-priority functions (CAN communication, data storage function, etc.). As a result, real-time LTE communication increases the load on the vehicle MCU.

Further prior art is described in US 6 732 031 B1, US 2005/038581 A1, in the article by Gao Guoyou et al.: "An Internet of Vehicles System for Remote Monitoring and Fault Diagnosis of Automobiles", in Journal of Automation and Control Engineering, vol. 6, no. 1, 1 June 2018, and in US 2016/350985 A1, US 2014/213238 A1, and US 2014/129047 A1.

### [DISCLOSURE]

### [TECHNICAL PROBLEM]

An object of the embodiments disclosed in this document is to provide an in-vehicle communication apparatus and an operation method thereof for supporting conversion between different communication interfaces and relaying data transmission and reception through an appropriate time delay.

### [TECHNICAL SOLUTION]

An in-vehicle communication apparatus for supporting conversion between different communication interfaces and relaying data transmission and reception through an appropriate time delay, according to an embodiment, includes a communication unit configured to perform first communication with a first module managing state data of a vehicle and second communication with a second module communicating with the outside, wherein said in-vehicle communication apparatus further comprises: a controller configured to acquire the state data of the vehicle from the first module through a first communication serial peripheral interface SPI and to transmit the state data of the vehicle through a second communication universal asynchronous receiver/transmitter interface UART to the second module, wherein the transmission rate of the first interface SPI is higher than that of the second interface UART, wherein the controller acquires the state data in units having a preset size from the first module and transmits the state data in units having the preset size to the second module, wherein the controller acquires, upon acquiring first state data in units having the preset size from the first module, second state data that is subsequent to the first state data after a preset time delay, and wherein the time delay is set in consideration of the time required for the controller to obtain the data of the set size unit from the first module and the time required for transmitting the data of the set size unit to the second module.

In the in-vehicle communication apparatus according to an embodiment, the preset time delay may be set in consideration of the time required for the controller to acquire the state data of the preset size unit from the first module and the time required for transmitting the state data of the preset size unit to the second module.

In the in-vehicle communication apparatus according to an embodiment, a size of a transmission buffer of the vehicle communication apparatus may be set in consideration of the preset time delay and an additional time delay caused by a size of a transmission buffer of the first module.

In the in-vehicle communication apparatus according to an embodiment, the first communication may be faster in data transmission rate per second than the second communication.

In the in-vehicle communication apparatus according to an embodiment, an interface of the first communication may be a Serial Peripheral Interface SPI, and an interface of the second communication may be a Universal Asynchronous Receiver/Transmitter UART.

In the in-vehicle communication apparatus according to an embodiment, the first module may include a microcontroller unit MCU configured to acquire and manage the state data of the vehicle via in-vehicle sensors, and the second module may include a communication module configured to perform long-distance communication with an external server.

An operation method of an in-vehicle communication apparatus for supporting conversion between different communication interfaces and relaying data transmission and reception through an appropriate time delay, as described above, includes acquiring state data of the vehicle by performing first communication with a first module through a first communication interface SPI, which is configured to manage the state data of the vehicle, and transmitting the state data of the vehicle through a second communication interface UART by performing second communication with a second module configured to communicate with the outside, wherein the transmission rate of the first interface SPI is higher than that of the second interface UART, wherein acquiring the state data of the vehicle includes acquiring the state data in units having a preset size from the first module, and transmitting the state data of the vehicle may include transmitting the state data in units having the preset size to the second module, and wherein acquiring the state data of the vehicle includes acquiring, upon acquiring first state data in units having the preset size from the first module, second state data that is subsequent to the first state data after a preset time delay, and wherein the time delay is set in consideration of the time required for the controller to obtain the data of the set size unit from the first module and the time required for transmitting the data of the set size unit to the second module.

In the operation method of the in-vehicle communication apparatus according to an embodiment, the preset time delay may be set in consideration of the time required for the controller to acquire the state data of the preset size unit from the first module and the time required for transmitting the state data of the preset size unit to the second module.

In the operation method of the in-vehicle communication apparatus according to an embodiment, a size of a transmission buffer of the vehicle communication apparatus may be set in consideration of the preset time delay and an additional time delay caused by a size of a transmission buffer of the first module.

In the operation method of the in-vehicle communication apparatus according to an embodiment, the first communication may be faster in data transmission rate per second than the second communication.

In the operation method of the in-vehicle communication apparatus according to an embodiment, an interface of the first communication may be a Serial Peripheral Interface SPI, and an interface of the second communication may be a Universal Asynchronous Receiver/Transmitter UART.

In the operation method of the in-vehicle communication apparatus according to an embodiment, the first module may include a Micro Controller Unit MCU configured to acquire and manage the state data of the vehicle via in-vehicle sensors, and the second module may include a communication module configured to perform long-distance communication with an external server.

### [ADVANTAGEOUS EFFECTS]

An in-vehicle communication apparatus and an operation method thereof that are capable of supporting conversion between different communication interfaces, e.g., SPI and UART, and relaying data transmission and reception through time delay are provided. According to the proposed embodiment, it is possible to improve the data transmission rate between the vehicle MCU and the LTE communication module and avoid data drop by processing a time delay set by a predetermined size unit of data transmission. Accordingly, it is possible to perform real-time LTE communication with an external server while minimizing the load on the vehicle MCU.

In addition, various effects that can be directly or qualitatively identified through this document can be provided.

### [DESCRIPTION OF DRAWINGS]

In order to more clearly describe the embodiments disclosed in this document and the technical solutions of the prior art, drawings required in the description of the embodiments are briefly introduced below. It should be understood that the drawings below are for the purpose of explaining the embodiments of the present specification and not for limiting purposes. In the drawings, certain components may be exaggerated or omitted for clarity of description.
FIG. 1 is a block diagram illustrating a configuration of a communication apparatus for relaying communication between a first module and a second module according to an embodiment;
FIG. 2 illustrates a specific application example of a communication apparatus according to an embodiment;
FIG. 3 is a data diagram for explaining a method of processing data in a communication apparatus according to an embodiment;
FIG. 4A is a diagram illustrating a communication procedure between a first module and a second module according to conventional technology, and FIG. 4B is a diagram illustrating a communication procedure among a communication apparatus, a first module, and a second module according to an embodiment;
FIG. 5 is a flowchart illustrating an operation method of a communication apparatus according to an embodiment; and
FIG. 6 is a flowchart illustrating an operation method of a communication apparatus according to another embodiment.

### [Mode for Invention]

Hereinafter, embodiments disclosed in this document will be described in detail with reference to exemplary drawings. In assigning reference numerals to the components of each drawing, it should be noted that the same components have the same reference numerals as much as possible even if they are displayed in different drawings. Detailed description of a well-known structure or function incorporated in the embodiments disclosed in this document may be omitted to avoid obscuring the understanding of the embodiments disclosed in this document.

Terms used in this document are only used to describe a specific embodiment and may not be intended to limit the scope of other embodiments. The singular forms are intended to include the plural forms as well unless the context clearly indicates otherwise.

Hereinafter, preferred embodiments of an in-vehicle communication apparatus and an operation method thereof will be described with reference to drawings.

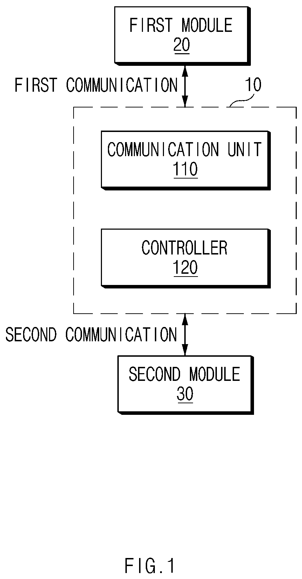

FIG. 1 is a block diagram illustrating a configuration of a communication apparatus for relaying communication between a first module and a second module according to an embodiment. With reference to FIG. 1, a communication apparatus 10 according to an embodiment includes a communication unit 110 and a controller 120. In this document, the components illustrated in the block diagram are classified according to their functions and roles, and each block does not necessarily have to be implemented as independent hardware or software. For example, separate components may be actually implemented as one device or program, or one component may be implemented as a combination of several devices and programs.

The communication unit 110 performs first communication with the first module 20 managing state data of the vehicle and performs the second communication with the second module 30 communicating with the outside. In this document, expressions such as "first" and "second" are used to distinguish components from each other and do not mean ranks or sequences between components.

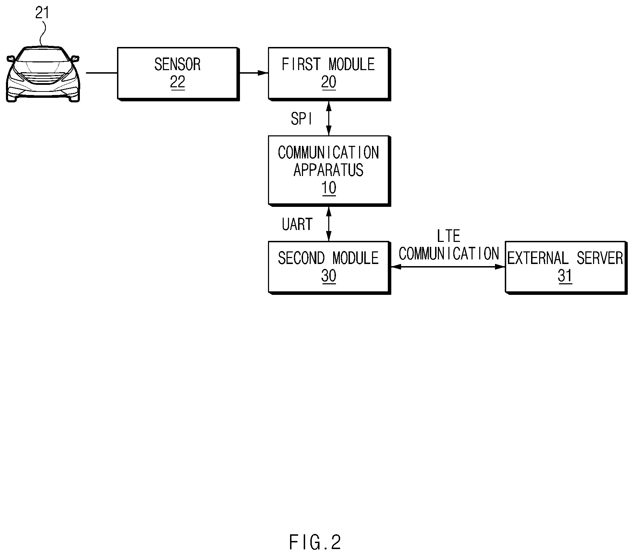

According to one embodiment, the first module 20 includes a microcontroller unit MCU for obtaining and managing state data of the vehicle via sensors in the vehicle, and the second module 30 may include a communication module that performs a long-distance communication with an external server. Detailed operations of the first module 20 and the second module 30 will be described later with reference to FIG. 2.

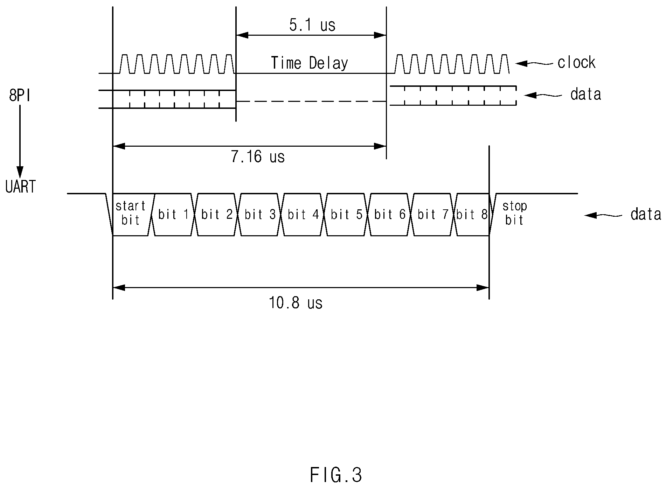

The controller 120 controls the communication apparatus 10 and the communication unit 110 to obtain vehicle state data from the first module 20 and transmit the vehicle state data to the second module 30. A detailed operation of the controller 120 processing data will be described later with reference to FIG. 3.

According to one embodiment, the communication apparatus 10 may include an integrated circuit device converting a first communication interface to a second communication interface and a driver controlling the operation of the integrated circuit device. This is a division of components of the communication apparatus 10 into hardware and software. For example, the integrated circuit device may be an SPI-to-UART Bridge IC such as SC16IS740, and the driver may be an SPI-to-UART driver that controls the operation of the circuit.

FIG. 2 illustrates a specific application example of a communication apparatus according to an embodiment. With reference to FIG. 2, the first module 20, e.g., an MCU such as the ESP32-WROOM32, acquires state data, e.g., temperature, battery current, voltage, emissions information, etc., of the vehicle 21 via a sensor 22 installed in the vehicle 21. The first module 20 obtains the vehicle state data if necessary, e.g., when an abnormality occurs in the vehicle, when vehicle state data is periodically transmitted to an external server, or when a request for data is received from the LTE module.

The second module 30, e.g., an LTE module such as EC25-E, receives the vehicle data via the communication apparatus 10 and transmits the data to the external server 31 through long-distance communication. The external server 31 collects state data of the vehicle at regular intervals or when an event occurs and provides the first module 20 with information required for vehicle management via the second module 30.

According to an embodiment, the first communication interface between the communication apparatus 10 and the first module 20 may be the serial peripheral interface SPI, and the second communication interface between the communication apparatus 10 and the second module 30 may be the universal synchronous receiver/transmitter UART. SPI uses a synchronous serial communication standard and has the advantage of fast data transmission, but requires a separate clock signal for synchronization between the transmitting end and the receiving end in addition to the line for data transmission. On the other hand, UART uses an asynchronous serial communication standard and sends parallel data bit by bit to an output pin according to a predetermined serial communication speed. UART has the maximum transmission rate of 921600 bps, which is slow, and it requires a start/stop bit to prevent data drop because of no use of a clock for synchronization, which decreases the actual transmission rate to 80%, i.e., 737280bps.

The LTE module used for data exchange with the MCU through the UART interface in the existing vehicle OBD has a problem in that the real-time LTE communication puts a heady load on the MCU due to the aforementioned low data rate and additional time delay of the UART. Accordingly, the communication apparatus according to an embodiment may obtain vehicle state data from the MCU through the SPI interface and transmit the data to the LTE module through the UART interface to improve data transmission speed.

FIG. 3 is a data diagram for explaining a method of processing data in a communication apparatus according to an embodiment. In an embodiment, the controller 120 may acquire data through a first communication interface SPI and transmit the data through a second communication interface UART. In the SPI, a separate clock signal is output for synchronizing the transmitting end and the receiving end, and data bits are transmitted according to the clock. UART is asynchronous and does not require a clock signal, and a start bit and a stop bit are output before and after a 1-byte data signal.

In this way, the controller 120 acquires data from the first module 20 in units of a set size, e.g., 1 byte=8 bits, and transmits the data to the second module 30 in units of a set size, e.g., 1 byte=8 bits. When data of the same size is transmitted, data drop may occur due to the difference in maximum transmission rate between the first communication interface SPI and the second communication interface UART, in this case, SPI is faster than UART. For example, when data exceeding the buffer size of the communication apparatus 10 is input from the first module 20 without all data being transmitted to the second module 30, the excess data may be dropped.

In order to prevent this, the controller 120 according to an embodiment may be configured to acquire next data after a set time delay when data of a set size unit is obtained. According to the embodiment, the time delay may be set in consideration of the time required for the controller to obtain the data of the set size unit from the first module and the time required for transmitting the data of the set size unit to the second module.

In addition, the size of the transmit buffer of the communication apparatus may be set in consideration of the set time delay and additional time delay caused by the size of the transmit buffer of the first module.

For example, the controller 120 may acquire 1 byte of data from the first module 20 through the SPI interface and then start acquiring next 1 byte of data after a time delay of 5.16 *µs*, considering the size of the transmit buffer of the SPI-to-UART Bridge IC. In this case, a memory overflow may theoretically occur when the transmit buffer size reaches 189890 bytes, resulting in data drop. In addition, the size of the SPI Tx FIFO (First In First Out) register inside the MCU is also 64 bytes, resulting in an additional delay of 1.012 ms when all data is filled in the buffer. Considering all these circumstances, the transmit buffer size may be set to 1408 bytes.

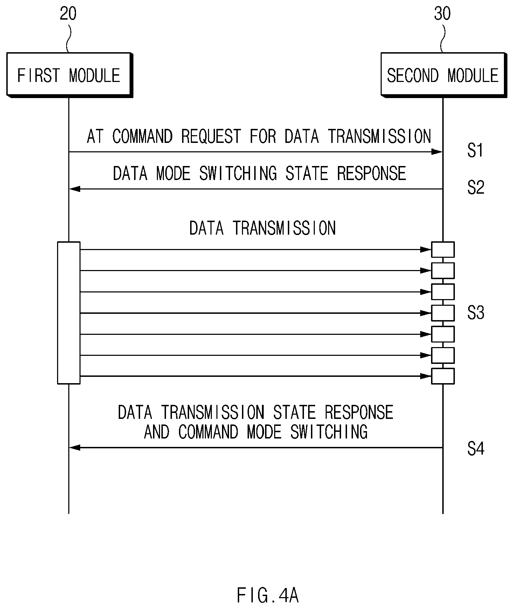

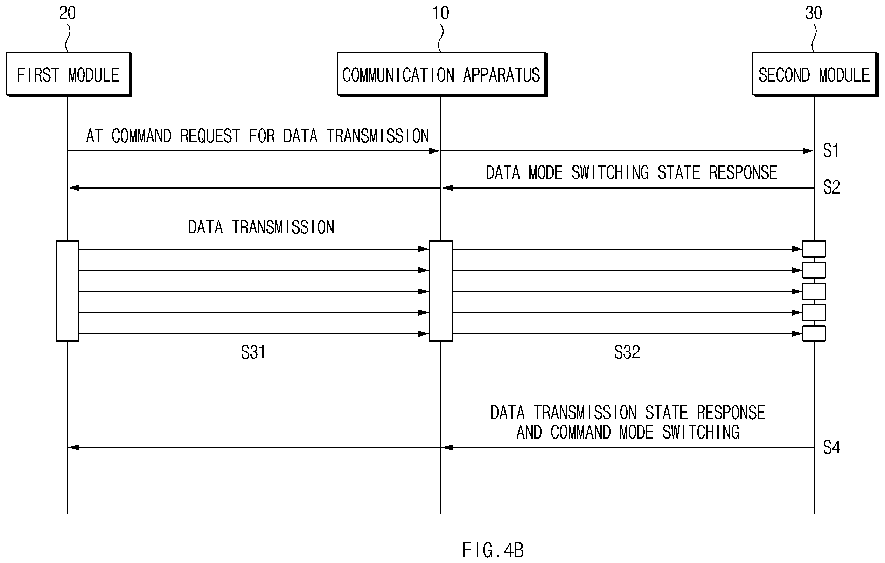

FIG. 4A is a diagram illustrating a communication procedure between a first module and a second module according to a conventional technology, and FIG. 4B is a diagram illustrating a communication procedure among a communication apparatus, a first module, and a second module according to an embodiment.

In FIG. 4A, the first module 20 may be a vehicle MCU such as ESP32-WROOM32, and the second module 30 may be an LTE module such as EC25-E. In the conventional structure, communication between the first and second modules 20 and 30 is performed through an asynchronous serial communication type UART interface. First, when the first module 20 requests, at step S1, the second module 30 an AT command for data transmission, the second module 30 responds at step S2 to inform the first module 20 of being switched to the data mode. Afterward, data is sequentially transmitted from the first module 20 to the second module 30 at step S3, and when the data transmission is completed, the transition to the command mode is notified at step S4. As described above, this data transmission method is not only slow, but may be further delayed by being pulled back by other functions (CAN communication, data storage function, etc.) having high priority in the data transmission process. As a result, real-time LTE communication increases the load on the vehicle MCU.

On the other hand, in FIG. 4B, the communication apparatus 10 relaying communication between the first module 20, e.g., vehicle MCU, and the second module 30, e.g., LTE module, is adopted. The communication apparatus 10 may perform first communication, e.g., SPI, with the first module 20 and second communication, e.g., UART, with the second module 30. First, an AT command for data transmission is received from the first module 20 and relayed to the second module 30 at step S1, and a data mode switching state response is received from the second module 30 and relayed to the first module 20 at step S2. In the data transmission process, as described above with reference to FIG. 3, data, e.g., vehicle state data, is obtained in units of a set size, 1 byte, through the first communication SPI at step S31, and the following data is received after a set delay time, e.g., 5.16 *µs*. Simultaneously, the data is relayed to the second module 30 in units of a set size, 1 byte, through the second communication UART at step S32. When the data transmission is completed, a command mode switching response is received from the second module 30 and relayed to the first module 20 at step S4.

As such, the in-vehicle communication apparatus according to an embodiment supports different communication interfaces, SPI and UART, to improve the data transmission rate between the vehicle MCU and the LTE communication module. In addition, it is possible to avoid data drop, which is caused by interface conversion, through appropriate time delay processing.

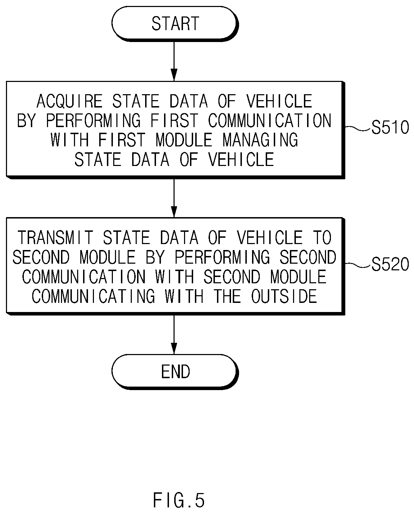

FIG. 5 is a flowchart illustrating an operation method of a communication apparatus according to an embodiment. As described above, a communication apparatus according to an embodiment may include a communication unit for communicating with other modules and a controller for controlling the operation of acquiring or transmitting data from or to other modules. In addition, by dividing the components into hardware and software, the communication apparatus may be composed of an integrated circuit device, e.g., SPI-to-UART bridge IC, for communication interface conversion and a driver for controlling the operation thereof.

With reference to FIG. 5, first, a first communication is performed with a first module managing vehicle state data to acquire vehicle state data at S510. According to an embodiment, the first module includes a vehicle MCU that obtains and manages state data of the vehicle through an in-vehicle sensor, and an interface of the first communication may be a serial synchronization type SPI.

Next, a second communication is performed with a second module that communicates with the outside, and a step of transmitting state data of the vehicle to the second module is performed at step S520. The second module includes a communication module, e.g., LTE module, that performs long-distance communication with an external server, and the interface for the second communication may be a serial asynchronous UART.

According to an embodiment, since the data transmission rate per second of the first communication SPI is higher than that of the second communication UART, the data transmission rate can be improved compared to the existing technology supporting only the second communication interface.

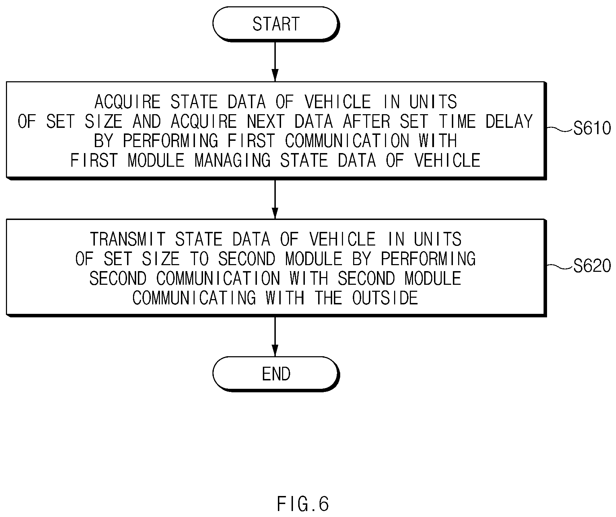

FIG. 6 is a flowchart illustrating an operation method of a communication apparatus according to another embodiment.

With reference to FIG. 6, step S610 of acquiring vehicle state data in units of a set size and then acquiring the following data after a set time delay is performed through first communication with a first module for managing vehicle state data.

According to an embodiment, the time delay may be set in consideration of a first time required to obtain data of the set size unit from the first module and a second time required to transmit the data of the set size unit to the second module. This is to prevent data drop caused by a difference between data transmission time using the SPI interface, first time, and data transmission time using the UART interface, second time. For example, when data is transmitted by 1 byte, the time delay may be set to 5.16 *µs*.

In addition, the size of the transmission buffer of the in-vehicle communication apparatus may be set in consideration of the set time delay and additional time delay caused by the size of the transmission buffer of the first module. For example, in the case of the time delay of 5.16 *µs*, a memory overflow may occur at the time when the transmission buffer size reaches 189890 bytes in theory, resulting in a data drop. In addition, the size of the SPI Tx FIFO (First In First Out) register inside the MCU is also 64 bytes, resulting in an additional delay of 1.012 ms when all data is filled in the buffer. Considering all these circumstances, the transmit buffer size may be set to 1408 bytes.

Next, step S620 of transmitting the state data of the vehicle to the second module in units of a set size is performed through second communication with the second module that communicates with the outside. The second module, e.g., LTE module, may transmit the received vehicle state data to an external server using long-distance communication.

The operation method of the in-vehicle communication apparatus according to the above embodiment may be implemented as an application or in the form of program commands that can be executed through various computer components and recorded on a computer-readable recording medium. The computer-readable recording medium may include program instructions, data files, data structures in individual or combined forms.

According to the above embodiments, it is possible to improve the data transmission rate between the vehicle MCU and the LTE communication module and avoid data drop by delaying data transmission by a predetermined size unit. Accordingly, it is possible to perform real-time LTE communication with the outside while minimizing the load on the vehicle MCU.

The scope of protection of technical ideas disclosed in this document shall be construed by the following claims.

## Claims

1. An in-vehicle communication apparatus (10) for supporting conversion between different communication interfaces and relaying data transmission and reception through an appropriate time delay, the apparatus (10) comprising:
a communication unit (110) configured to perform first communication with a first module (20) managing state data of a vehicle (21) and second communication with a second module (30) communicating with the outside, said in-vehicle communication apparatus (10) being **characterized in that** it further comprises :
a controller (120) configured to acquire the state data of the vehicle (21) from the first module (20) through a first communication serial peripheral interface SPI and to transmit the state data of the vehicle (21) through a second communication universal asynchronous receiver/transmitter interface UART to the second module (30), wherein the transmission rate of the first interface SPI is higher than that of the second interface UART,
wherein the controller (120) is further configured to acquire the state data in units having a preset size from the first module (20) and to transmit the state data in units having the preset size to the second module (30),
wherein the controller (120) is further configured to acquire, upon acquiring first state data in units having the preset size from the first module (20), second state data that is subsequent to the first state data after a preset time delay, and
wherein the time delay is set in consideration of the time required for the controller (120) to obtain the data of the set size unit from the first module (20) and the time required for transmitting the data of the set size unit to the second module (30).

2. The apparatus (10) of claim 1, wherein the preset time delay is set in consideration of the time required for the controller (120) to acquire the state data of the preset size unit from the first module (20) and the time required for transmitting the state data of the preset size unit to the second module (30).

3. The apparatus (10) of claim 2, wherein a size of a transmission buffer of the vehicle communication apparatus (10) is set in consideration of the preset time delay and an additional time delay caused by a size of a transmission buffer of the first module (20).

4. The apparatus (10) of claim 1, wherein the first communication is faster in data transmission rate per second than the second communication.

5. The apparatus (10) of claim 4, wherein an interface of the first communication is a Serial Peripheral Interface SPI, and an interface of the second communication is a Universal Asynchronous Receiver/Transmitter UART.

6. The apparatus (10) of claim 1, wherein the first module (20) comprises a microcontroller unit MCU configured to acquire and manage the state data of the vehicle (21) via in-vehicle sensors, and the second module (30) comprises a communication module configured to perform long-distance communication with an external server (31).

7. An operation method of an in-vehicle communication apparatus (10) for supporting conversion between different communication interfaces and relaying data transmission and reception through an appropriate time delay, as defined in any one of the preceding claims,
said method being **characterized in that** it comprises the steps of :
acquiring (S510) state data of the vehicle (21) by performing first communication with a first module (20) through a first communication interface SPI configured to manage the state data of the vehicle (21); and
transmitting (S520) the state data of the vehicle (21) through a second communication interface UART by performing second communication with a second module (30) configured to communicate with the outside, wherein the transmission rate of the first interface SPI is higher than that of the second interface UART,
wherein acquiring (S510) the state data of the vehicle (21) comprises acquiring (S610) the state data in units having a preset size from the first module (20), and transmitting (S520) the state data of the vehicle (21) comprises transmitting (S620) the state data in units having the preset size to the second module (30),
wherein acquiring (S510) the state data of the vehicle (21) comprises acquiring (S610), upon acquiring first state data in units having the preset size from the first module (20), second state data that is subsequent to the first state data after a preset time delay, and
wherein the time delay is set in consideration of the time required for the controller (120) to obtain the data of the set size unit from the first module (20) and the time required for transmitting the data of the set size unit to the second module (30).

8. The method of claim 7, wherein the preset time delay is set in consideration of the time required for the controller (120) to acquire the state data of the preset size unit from the first module (20) and the time required for transmitting the state data of the preset size unit to the second module (30).

9. The method of claim 8, wherein a size of a transmission buffer of the vehicle communication apparatus (10) is set in consideration of the preset time delay and an additional time delay caused by a size of a transmission buffer of the first module (20).

10. The method of claim 7, wherein the first communication is faster in data transmission rate per second than the second communication.

11. The method of claim 10, wherein an interface of the first communication is a Serial Peripheral Interface SPI, and an interface of the second communication is a Universal Asynchronous Receiver/Transmitter UART.

12. The method of claim 7, wherein the first module (20) comprises a microcontroller unit MCU configured to acquire and manage the state data of the vehicle (21) via in-vehicle sensors (22), and the second module (30) comprises a communication module configured to perform long-distance communication with an external server (31).

## Patentansprüche

1. Fahrzeuginterne Kommunikationsvorrichtung (10) zur Unterstützung der Umwandlung zwischen verschiedenen Kommunikationsschnittstellen und zur Weiterleitung der Datenübertragung und des Datenempfangs durch eine angemessene Zeitverzögerung, wobei die Vorrichtung (10) umfasst:
eine Kommunikationseinheit (110), die konfiguriert ist, um eine erste Kommunikation mit einem ersten Modul (20), das Zustandsdaten eines Fahrzeugs (21) verwaltet, und
eine zweite Kommunikation mit einem zweiten Modul (30), das mit der Außenwelt kommuniziert, durchzuführen, wobei die fahrzeuginterne Kommunikationsvorrichtung (10) **dadurch gekennzeichnet ist, dass** sie ferner umfasst:
eine Steuerung (120), die konfiguriert ist, um die Zustandsdaten des Fahrzeugs (21) vom ersten Modul (20) über eine erste serielle periphere Kommunikationsschnittstelle SPI zu erfassen und die Zustandsdaten des Fahrzeugs (21) über eine zweite universelle asynchrone Empfänger/Sender-Kommunikationsschnittstelle UART an das zweite Modul (30) zu übertragen,
wobei die Übertragungsrate der ersten Schnittstelle SPI höher ist als die der zweiten Schnittstelle UART,
wobei die Steuerung (120) ferner konfiguriert ist, um die Zustandsdaten in Einheiten mit einer voreingestellten Größe vom ersten Modul (20) zu erfassen und um die Zustandsdaten in Einheiten mit der voreingestellten Größe an das zweite Modul (30) zu übertragen,
wobei die Steuerung (120) ferner konfiguriert ist, um nach dem Erfassen erster Zustandsdaten in Einheiten mit der voreingestellten Größe vom ersten Modul (20) zweite Zustandsdaten zu erfassen, die auf die ersten Zustandsdaten nach einer voreingestellten Zeitverzögerung folgen, und
wobei die Zeitverzögerung unter Berücksichtigung der Zeit, die die Steuerung (120) benötigt, um die Daten der Einheit mit der eingestellten Größe vom ersten Modul (20) zu erhalten, und der Zeit, die zum Übertragen der Daten der Einheit mit der eingestellten Größe an das zweite Modul (30) benötigt wird, eingestellt wird.

2. Vorrichtung (10) nach Anspruch 1, wobei die voreingestellte Zeitverzögerung unter Berücksichtigung der Zeit eingestellt wird, die die Steuerung (120) benötigt, um die Zustandsdaten der Einheit mit der voreingestellten Größe vom ersten Modul (20) zu erfassen, und der Zeit, die zum Übertragen der Zustandsdaten der Einheit mit der voreingestellten Größe an das zweite Modul (30) benötigt wird.

3. Vorrichtung (10) nach Anspruch 2, wobei eine Größe eines Übertragungspuffers der Fahrzeug-Kommunikationsvorrichtung (10) unter Berücksichtigung der voreingestellten Zeitverzögerung und einer zusätzlichen Zeitverzögerung, die durch eine Größe eines Übertragungspuffers des ersten Moduls (20) verursacht wird, eingestellt wird.

4. Vorrichtung (10) nach Anspruch 1, wobei die erste Kommunikation in der Datenübertragungsrate pro Sekunde schneller ist als die zweite Kommunikation.

5. Vorrichtung (10) nach Anspruch 4, wobei eine Schnittstelle der ersten Kommunikation eine serielle periphere Schnittstelle (Serial Peripheral Interface, SPI) ist, und eine Schnittstelle der zweiten Kommunikation ein universeller asynchroner Empfänger/Sender (Universal Asynchronous Receiver/Transmitter, UART) ist.

6. Vorrichtung (10) nach Anspruch 1, wobei das erste Modul (20) eine Mikrocontrollereinheit MCU umfasst, die konfiguriert ist, um die Zustandsdaten des Fahrzeugs (21) über fahrzeuginterne Sensoren zu erfassen und zu verwalten, und das zweite Modul (30) ein Kommunikationsmodul umfasst, das konfiguriert ist, um eine Fernkommunikation mit einem externen Server (31) durchzuführen.

7. Betriebsverfahren einer fahrzeuginternen Kommunikationsvorrichtung (10) zur Unterstützung der Umwandlung zwischen verschiedenen Kommunikationsschnittstellen und zur Weiterleitung der Datenübertragung und des Datenempfangs durch eine angemessene Zeitverzögerung, wie in einem der vorhergehenden Ansprüche definiert,
wobei das Verfahren **dadurch gekennzeichnet ist, dass** es die folgenden Schritte umfasst:
Erfassen (S510) von Zustandsdaten des Fahrzeugs (21) durch Durchführen einer ersten Kommunikation mit einem ersten Modul (20) über eine erste Kommunikationsschnittstelle SPI, die zum Verwalten der Zustandsdaten des Fahrzeugs (21) konfiguriert ist; und
Übertragen (S520) der Zustandsdaten des Fahrzeugs (21) über eine zweite Kommunikationsschnittstelle UART durch Durchführen einer zweiten Kommunikation mit einem zweiten Modul (30), das zum Kommunizieren mit der Außenwelt konfiguriert ist, wobei die Übertragungsrate der ersten Schnittstelle SPI höher ist als die der zweiten Schnittstelle UART,
wobei das Erfassen (S510) der Zustandsdaten des Fahrzeugs (21) das Erfassen (S610) der Zustandsdaten in Einheiten mit einer voreingestellten Größe vom ersten Modul (20) umfasst, und das Übertragen (S520) der Zustandsdaten des Fahrzeugs (21) das Übertragen (S620) der Zustandsdaten in Einheiten mit der voreingestellten Größe an das zweite Modul (30) umfasst,
wobei das Erfassen (S510) der Zustandsdaten des Fahrzeugs (21) das Erfassen (S610), nach dem Erfassen erster Zustandsdaten in Einheiten mit der voreingestellten Größe vom ersten Modul (20), von zweiten Zustandsdaten umfasst, die auf die ersten Zustandsdaten nach einer voreingestellten Zeitverzögerung folgen, und
wobei die Zeitverzögerung unter Berücksichtigung der Zeit, die die Steuerung (120) benötigt, um die Daten der Einheit mit der eingestellten Größe vom ersten Modul (20) zu erhalten, und der Zeit, die zum Übertragen der Daten der Einheit mit der eingestellten Größe an das zweite Modul (30) benötigt wird, eingestellt wird.

8. Verfahren nach Anspruch 7, wobei die voreingestellte Zeitverzögerung unter Berücksichtigung der Zeit eingestellt wird, die die Steuerung (120) benötigt, um die Zustandsdaten der Einheit mit der voreingestellten Größe vom ersten Modul (20) zu erfassen, und der Zeit, die zum Übertragen der Zustandsdaten der Einheit mit der voreingestellten Größe an das zweite Modul (30) benötigt wird.

9. Verfahren nach Anspruch 8, wobei eine Größe eines Übertragungspuffers der Fahrzeug-Kommunikationsvorrichtung (10) unter Berücksichtigung der voreingestellten Zeitverzögerung und einer zusätzlichen Zeitverzögerung, die durch eine Größe eines Übertragungspuffers des ersten Moduls (20) verursacht wird, eingestellt wird.

10. Verfahren nach Anspruch 7, wobei die erste Kommunikation in der Datenübertragungsrate pro Sekunde schneller ist als die zweite Kommunikation.

11. Verfahren nach Anspruch 10, wobei eine Schnittstelle der ersten Kommunikation eine serielle periphere Schnittstelle (Serial Peripheral Interface, SPI) ist, und eine Schnittstelle der zweiten Kommunikation ein universeller asynchroner Empfänger/Sender (Universal Asynchronous Receiver/Transmitter, UART) ist.

12. Verfahren nach Anspruch 7, wobei das erste Modul (20) eine Mikrocontrollereinheit MCU umfasst, die konfiguriert ist, um die Zustandsdaten des Fahrzeugs (21) über fahrzeuginterne Sensoren (22) zu erfassen und zu verwalten, und das zweite Modul (30) ein Kommunikationsmodul umfasst, das konfiguriert ist, um eine Fernkommunikation mit einem externen Server (31) durchzuführen.

## Revendications

1. Appareil de communication embarqué (10) pour prendre en charge la conversion entre différentes interfaces de communication et relayer la transmission et la réception de données par le biais d'un retard approprié, l'appareil (10) comprenant :
une unité de communication (110) configurée pour effectuer une première communication avec un premier module (20) gérant des données d'état d'un véhicule (21) et une seconde communication avec un second module (30) communiquant avec l'extérieur, ledit appareil de communication embarqué (10) étant **caractérisé en ce qu'**il comprend en outre :
un contrôleur (120) configuré pour acquérir les données d'état du véhicule (21) auprès du premier module (20) par l'intermédiaire d'une première interface de communication périphérique série SPI et pour transmettre les données d'état du véhicule (21) par l'intermédiaire d'une seconde interface de communication de récepteur/émetteur asynchrone universel UART au second module (30),
dans lequel la vitesse de transmission de la première interface SPI est supérieure à celle de la seconde interface UART,
dans lequel le contrôleur (120) est en outre configuré pour acquérir les données d'état en unités ayant une taille prédéfinie auprès du premier module (20) et pour transmettre les données d'état en unités ayant la taille prédéfinie au second module (30),
dans lequel le contrôleur (120) est en outre configuré pour acquérir, lors de l'acquisition de premières données d'état en unités ayant la taille prédéfinie auprès du premier module (20), de secondes données d'état qui suivent les premières données d'état après un retard prédéfini, et
dans lequel le retard est réglé en tenant compte du temps requis pour que le contrôleur (120) obtienne les données de l'unité de taille définie auprès du premier module (20) et du temps requis pour transmettre les données de l'unité de taille définie au second module (30).

2. Appareil (10) selon la revendication 1, dans lequel le retard prédéfini est réglé en tenant compte du temps requis pour que le contrôleur (120) acquière les données d'état de l'unité de taille prédéfinie auprès du premier module (20) et du temps requis pour transmettre les données d'état de l'unité de taille prédéfinie au second module (30).

3. Appareil (10) selon la revendication 2, dans lequel une taille d'un tampon de transmission de l'appareil de communication de véhicule (10) est réglée en tenant compte du retard prédéfini et d'un retard supplémentaire provoqué par une taille d'un tampon de transmission du premier module (20).

4. Appareil (10) selon la revendication 1, dans lequel la première communication est plus rapide en vitesse de transmission de données par seconde que la seconde communication.

5. Appareil (10) selon la revendication 4, dans lequel une interface de la première communication est une interface périphérique série SPI, et une interface de la seconde communication est un récepteur/émetteur asynchrone universel UART.

6. Appareil (10) selon la revendication 1, dans lequel le premier module (20) comprend une unité de microcontrôleur MCU configurée pour acquérir et gérer les données d'état du véhicule (21) par l'intermédiaire de capteurs embarqués, et le second module (30) comprend un module de communication configuré pour effectuer une communication à longue distance avec un serveur externe (31).

7. Procédé de fonctionnement d'un appareil de communication embarqué (10) pour prendre en charge la conversion entre différentes interfaces de communication et relayer la transmission et la réception de données par le biais d'un retard approprié, tel que défini dans l'une quelconque des revendications précédentes,
ledit procédé étant **caractérisé en ce qu'**il comprend les étapes consistant à :
acquérir (S510) des données d'état du véhicule (21) en effectuant une première communication avec un premier module (20) par l'intermédiaire d'une première interface de communication SPI configurée pour gérer les données d'état du véhicule (21) ; et
transmettre (S520) les données d'état du véhicule (21) par l'intermédiaire d'une seconde interface de communication UART en effectuant une seconde communication avec un second module (30) configuré pour communiquer avec l'extérieur, dans lequel la vitesse de transmission de la première interface SPI est supérieure à celle de la seconde interface UART,
dans lequel l'acquisition (S510) des données d'état du véhicule (21) comprend l'acquisition (S610) des données d'état en unités ayant une taille prédéfinie auprès du premier module (20), et la transmission (S520) des données d'état du véhicule (21) comprend la transmission (S620) des données d'état en unités ayant la taille prédéfinie au second module (30),
dans lequel l'acquisition (S510) des données d'état du véhicule (21) comprend l'acquisition (S610), lors de l'acquisition de premières données d'état en unités ayant la taille prédéfinie auprès du premier module (20), de secondes données d'état qui suivent les premières données d'état après un retard prédéfini, et
dans lequel le retard est réglé en tenant compte du temps requis pour que le contrôleur (120) obtienne les données de l'unité de taille définie auprès du premier module (20) et du temps requis pour transmettre les données de l'unité de taille définie au second module (30).

8. Procédé selon la revendication 7, dans lequel le retard prédéfini est réglé en tenant compte du temps requis pour que le contrôleur (120) acquière les données d'état de l'unité de taille prédéfinie auprès du premier module (20) et du temps requis pour transmettre les données d'état de l'unité de taille prédéfinie au second module (30).

9. Procédé selon la revendication 8, dans lequel une taille d'un tampon de transmission de l'appareil de communication de véhicule (10) est réglée en tenant compte du retard prédéfini et d'un retard supplémentaire provoqué par une taille d'un tampon de transmission du premier module (20).

10. Procédé selon la revendication 7, dans lequel la première communication est plus rapide en vitesse de transmission de données par seconde que la seconde communication.

11. Procédé selon la revendication 10, dans lequel une interface de la première communication est une interface périphérique série SPI, et une interface de la seconde communication est un récepteur/émetteur asynchrone universel UART.

12. Procédé selon la revendication 7, dans lequel le premier module (20) comprend une unité de microcontrôleur MCU configurée pour acquérir et gérer les données d'état du véhicule (21) par l'intermédiaire de capteurs embarqués (22), et le second module (30) comprend un module de communication configuré pour effectuer une communication à longue distance avec un serveur externe (31).
